# EUROPÄISCHE PATENTSCHRIFT

(11) **EP 2 096 325 B1**
(45) Veröffentlichungstag und Bekanntmachung des Hinweises auf die Patenterteilung: **02.02.2011**
(21) Anmeldenummer: 08405060.8
(22) Anmeldetag: 27.02.2008
(51) Int. Cl.: F16C 29/04

(54) **Linearführungssystem mit einer einen Laufbahneinsatz aufweisenden Führungsschiene und mit einem zwangsgeführten Käfig für Wälzkörper**
Linear guide system with a guide rail with a track insert and a guided retainer for roller bodies
Système de guidage linéaire doté d'un rail de guidage comprenant une bande de déroulement et d'une cage guidé pour éléments roulants

(43) Veröffentlichungstag der Anmeldung: 02.09.2009
(73) Patentinhaber: Schneeberger Holding AG, 4914 Roggwil (CH)
(72) Erfinder: Mischler, Ernst, 4914 Roggwill (CH); Grolimund, Thomas, 4710 Balsthal (CH)
(74) Vertreter: EGLI-EUROPEAN PATENT ATTORNEYS

(56) Entgegenhaltungen:
- EP-A- 1 808 608
- EP-A- 1 826 425
- DE-U1-202004 002 258
- GB-A- 2 336 185
- JP-A- 2003 262 224

## Beschreibung

Die Erfindung bezieht sich auf ein Linearführungssystem mit einem in einer vorgegebenen Richtung bewegbaren Führungskörper und einer Führungsschiene zur Führung des Führungskörpers, welcher Führungskörper über mehrere Wälzkörper an der Führungsschiene abgestützt ist, wobei jeder Wälzkörper mit mindestens einer an der Führungsschiene ausgebildeten Wälzkörper-Lauffläche und mit mindestens einer an dem Führungskörper ausgebildeten Wälzkörper-Lauffläche in Kontakt steht.

In bekannten Linearführungssystemen dieser Art dient der Führungskörper in der Regel zur Aufnahme einer Last, welche in einer vorgegebenen Richtung bewegt und dabei geführt werden soll. In einer typischen Anwendung könnte der Führungskörper eines Linearführungssystems beispielsweise als Träger für eine zu bewegende Tischplatte einer Maschine oder für ein anderes zu bewegendes Maschinenelement dienen. Der Führungskörper könnte auch selbst als eine (zu bewegende) Tischplatte einer Maschine oder ein anderes zu bewegendes Maschinenelement ausgelegt sein.

Unter "Führungsschiene" soll in diesem Zusammenhang jede Struktur verstanden werden, an der die Wälzkörper-Laufflächen ausgebildet sind und die in der Lage ist, den Führungskörper längs der jeweiligen Wälzkörper-Laufflächen zu führen und die über den Führungskörper und die Wälzkörper-Laufflächen übertragene Last aufzunehmen. Dabei ist zu gewährleisten, dass der Führungskörper innerhalb vorgegebener Toleranzen entlang einer vorgegebenen Richtung bewegt werden kann. Zu diesem Zweck muss die Führungsschiene derart gebaut sein, dass sie als Ganzes stabil gegenüber der Wirkung der jeweiligen Last ist, d.h. durch die jeweilige Last bedingte Deformationen sollen (im Rahmen bestimmter Toleranzen) vermieden werden.

Aus EP 1236912 A1 ist ein Linearführungssystem bekannt, welches eine massive (einstückig ausgebildete) Führungsschiene und einen an der Führungsschiene geführten (und einstückig ausgebildeten) Führungskörper aufweist. Bei diesem Linearführungssystem ist der Führungskörper an der Führungsschiene über Wälzkörper abgestützt, die in einer oder mehreren Reihen in zumindest einem Käfig hintereinander angeordnet sind und jeweils mit einer Wälzkörper-Lauffläche an der Führungsschiene und mit einer Wälzkörper-Lauffläche an dem Führungskörper in Kontakt stehen. Um zu gewährleisten, dass die Wälzkörper nicht gegenüber der Führungsschiene oder dem Führungskörper entlang der jeweiligen Wälzkörper-Lauffläche unkontrolliert verrutschen, ist die Linearführung mit einer Zwangsführung für den Käfig ausgestattet. Diese Zwangsführung umfasst ein Zahnrad, welches an dem Käfig befestigt ist, und zwei Zahnstangen, von denen eine an der Führungsschiene und die andere an dem Führungskörper befestigt ist, wobei beide Zahnstangen derart angeordnet sind, dass ihre Zähne zwischen die Führungsschiene und den Führungskörper ragen und mit dem Zahnrad verzahnt sind. Diese Zwangsführung bewirkt, dass der Käfig und somit die in dem Käfig angeordneten Wälzkörper relativ zur Führungsschiene und relativ zum Führungskörper immer eine Lage annehmen, die ausschliesslich durch die relative Lage des Führungskörpers bezüglich der Führungsschiene bestimmt ist.

Dieses Linearführungssystem hat mehrere Nachteile. Die Führungsschiene und der Führungskörper müssen in der Regel aus Wälzlagerstahl gefertigt werden, um zu erreichen, dass die Wälzkörper-Laufflächen des Linearführungssystems unter Belastungen eine lange Lebensdauer erreichen. Das Linearführungssystem hat deshalb in der Regel ein grosses Gewicht. Weiterhin ist die Montage aller Komponenten der Zwangsführung für den Käfig aufwändig.

Aus DE 20 2004 002 258 U1 und WO 2006/028142 A1 ist jeweils ein Linearführungssystem mit einem längs einer Führungsschiene bewegbaren Führungskörper bekannt, dessen Führungsschiene mehrteilig ausgebildet ist und mindestens einen Grundkörper und mindestens einen Laufbahneinsatz umfasst, wobei der jeweilige Laufbahneinsatz in jeweils einer im Grundkörper ausgebildeten Nut durch Kleben und/oder Einklemmen befestigt ist und mindestens eine der jeweiligen Wälzkörper-Laufflächen an einer Oberfläche dieses Laufbahneinsatzes ausgebildet ist. Der jeweilige Führungskörper ist jeweils über Wälzkörper, die in mindestens einer Reihe in einem Käfig angeordnet sind, auf mindestens einer Wälzkörper-Lauffläche des jeweiligen Laufbahneinsatzes abgestützt.

Derartige Linearführungssysteme haben den Vorteil, dass wegen der mehrteiligen Konstruktion der jeweiligen Führungsschiene die Möglichkeit besteht, zur Realisierung der Führungsschiene verschiedene Werkstoffe miteinander zu kombinieren und durch geeignete Wahl von Werkstoffen das Linearführungssystem im Hinblick auf bestimmte Anwendungen zu optimieren.

Gemäss DE 20 2004 002 258 U1 kann der Grundkörper der jeweiligen Führungsschiene beispielsweise aus einem ersten Werkstoff und der Laufbahneinsatz aus einem zweiten Werkstoff gefertigt sein, wobei der erste Werkstoff ein geringeres spezifisches Gewicht als der zweite Werkstoff hat und welcher zweite Werkstoff eine grössere Wälzfestigkeit als der erste Werkstoff aufweist. Der Laufbahneinsatz kann beispielsweise aus Wälzlagerstahl gefertigt sein, um eine lange Lebensdauer der jeweiligen Wälzkörper-Laufflächen zu gewährleisten. Es ist allerdings nicht notwendig, den Grundkörper der Führungsschiene ebenfalls aus Wälzlagerstahl zu fertigen. Der Grundkörper kann beispielsweise aus einem Leichtmetall, einer Leichtmetalllegierung oder anderen im Vergleich zum Werkstoff des Laufbahneinsatzes verhältnismässig leichten Materialien gefertigt sein. Auf diese Weise ist es möglich, ein kompakt gebautes Linearführungssystem mit reduziertem Gesamtgewicht zu realisieren und trotzdem eine lange Lebensdauer der Wälzkörper-Laufflächen zu gewährleisten.

Nachteilig an den beiden vorstehend genannten Linearführungssystemen ist, dass der jeweilige Käfig nicht gegenüber der Führungsschiene und dem Führungskörper zwangsgeführt ist, sodass sich die Anordnung des jeweiligen Käfigs und somit die Anordnung der Wälzkörper relativ zum Führungskörper und zur Führungsschiene unkontrolliert verändern können. Im vorliegenden Fall können demnach die Wälzkörper gegenüber der Führungsschiene oder dem Führungskörper entlang der jeweiligen Wälzkörper-Lauffläche unkontrolliert verrutschen.

Die JP 2003 262224 zeigt ein Linearführungssystem, das zwei Schienenkörper mit beidseitigen Nuten aufweist, in denen eine Wälzelementeinheit geführt ist. Diese Wälzeinheit weist eine Zwangsführung auf, die aus einem Eingriffsobjekt besteht, das in Nuten eingreift, die zwischen Laufbahnen der Einheit ausgebildet sind. Trotz seines massiven Aufbaus ist allerdings keine hohe Lastaufnahme möglich, ohne die Zwangsführung zu beschädigen.

Der vorliegenden Erfindung liegt die Aufgabe zugrunde, ein Linearführungssystem mit in mindestens einem Käfig angeordneten Wälzkörpern und mit einer Zwangsführung für den jeweiligen Käfig zu schaffen, welches in einer kompakten Form und gegebenenfalls in einer Leichtbauweise gebaut werden kann, das eine hohe Lastaufnahme erlaubt und ausserdem die Möglichkeit dafür bietet, dass die jeweilige Zwangsführung verhältnismässig einfach installiert werden kann.

Diese Aufgabe wird gemäss der Erfindung durch ein Linearführungssystem mit den Merkmalen des Patentanspruchs 1 gelöst. Dieses Linearführungssystem umfasst einen in einer vorgegebenen Richtung bewegbaren Führungskörper und eine Führungsschiene zur Führung des Führungskörpers, welcher Führungskörper über mehrere Wälzkörper an der Führungsschiene abgestützt ist, wobei jeder Wälzkörper mit mindestens einer an der Führungsschiene ausgebildeten Wälzkörper-Lauffläche und mit mindestens einer an dem Führungskörper ausgebildeten Wälzkörper-Lauffläche in Kontakt steht.

Mindestens eine Gruppe von mehreren Wälzkörpern ist in jeweils einem Käfig angeordnet, welcher relativ zur Führungsschiene und zum Führungskörper mittels einer Zwangsführung geführt ist. Die Zwangsführung des jeweiligen Käfigs umfasst ein an dem Käfig befestigtes Zahnrad und mindestens zwei Zahnreihen, wobei eine der Zahnreihen ortsfest an der Führungsschiene und eine andere der Zahnreihen ortsfest an dem Führungskörper derart angeordnet ist, dass das Zahnrad mit beiden Zahnreihen verzahnt ist.

Die Führungsschiene des erfindungsgemässen Linearführungssystems ist mehrteilig ausgebildet und umfasst mindestens einen Grundkörper und mindestens einen Laufbahneinsatz, wobei der jeweilige Laufbahneinsatz in jeweils einer im Grundkörper ausgebildeten Nut mittels einer stoffschlüssigen Verbindung und/oder durch Einklemmen befestigt ist und mindestens eine der jeweiligen Wälzkörper-Laufflächen an einer Oberfläche dieses Laufbahneinsatzes ausgebildet ist. Als "stoffschlüssige Verbindungen" kommen in diesem Zusammenhang Verbindungen infrage, die beispielsweise durch Kleben, Löten oder Schweissen realisierbar sind. Die Befestigung der Laufbahneinsätze mittels einer stoffschlüssigen Verbindung und/oder Einklemmen ermöglicht es, auch Laufbahneinsätze zu befestigen, die derart klein sind, dass sie mit konventionellen mechanischen Befestigungsmitteln (beispielsweise Schrauben oder Nieten) nicht am Grundkörper befestigt werden können.

Der jeweilige Grundkörper ist aus einem ersten Werkstoff und der Laufbahneinsatz ist aus einem zweiten Werkstoff gefertigt, welcher erste Werkstoff ein geringeres spezifisches Gewicht als der zweite Werkstoff hat und welcher zweite Werkstoff eine grössere Wälzfestigkeit als der erste Werkstoff aufweist.

Aufgrund der mehrteiligen Konstruktion der Führungsschiene ist es demnach möglich, durch eine geeignete Wahl der verschiedenen Werkstoffe für den jeweiligen Grundkörper der Führungsschiene und den jeweiligen Laufbahneinsatz ein kompaktes Linearführungssystem mit einem geringen Gesamtgewicht zu realisieren.

Gemäss der Erfindung ist vorgesehen, dass der jeweilige Laufbahneinsatz ein einstückiger Körper ist, wobei die eine der Zahnreihen in einem Teilbereich dieses Körpers ausgebildet ist. Ein derartiger Laufbahneinsatz umfasst somit mindestens eine Lauffläche und eine der Zahnreihen der Zwangsführung. Auf diese Weise ist ein Teil der Zwangsführung in einen (in einem Stück gefertigten) Laufbahneinsatz integriert.

Die Integration einer Zahnreihe in einen Laufbahneinsatz hat mehrere Vorteile. Zum einen kann eine Zahnreihe mit konventionellen Mitteln und mit grosser Präzision an der Oberfläche eines Laufbahneinsatzes gefertigt werden. Es ist beispielsweise möglich, mit bekannten elektrochemischen Verfahren oder durch Elektroerosion eine Zahnreihe an metallischen Oberflächen (beispielsweise an Oberflächen aus Stahl) mit grosser Genauigkeit herzustellen. Bei der Herstellung der Zahnreihen kann bereits sichergestellt werden, dass die jeweilige Zahnreihe innerhalb vorgegebener Toleranzen relativ zu einer Wälzkörperlauf-Lauffläche angeordnet ist. Beim Einbau des Laufbahneinsatzes in eine Nut des Grundkörpers der Führungsschiene ist demnach automatisch sichergestellt, dass eine Zahnreihe der Zwangsführung bezüglich der jeweiligen Wälzkörper-Lauffläche mit einer Genauigkeit angeordnet wird, die den bei der Herstellung der jeweiligen Zahnreihe erzielbaren Fertigungstoleranzen entspricht. Dieser Einbau kann in einem einzigen Arbeitsvorgang durchgeführt werden. Die Erfindung ermöglicht es somit, auf den Einbau einer separaten Zahnstange, die eine Zahnreihe der Zwangsführung erhält, und auf eine präzise Ausrichtung einer solchen Zahnstange bezüglich einer Wälzkörper-Lauffläche der jeweiligen Führungsschiene zu verzichten. Die Montage des erfindungsgemässen Linearführungssystems kann deshalb mit verhältnismässig geringem Aufwand und mit relativ grosser Genauigkeit hinsichtlich der Positionierung der Zahnreihe der Zwangsführung durchgeführt werden.

Erfindungsgemäss ist weiterhin vorgesehen, dass mindestens eine Teilmenge der Wälzkörper derart zwischen einer Wälzkörper-Lauffläche des jeweiligen Laufbahneinsatzes und dem Führungskörper angeordnet ist, dass die Wälzkörper der Teilmenge jeweils mit einer Anpresskraft in einer vorgegebenen Anpressrichtung an die Wälzkörper-Lauffläche des jeweiligen Laufbahneinsatzes gepresst werden, wobei das Zahnrad an dem jeweiligen Käfig derart angeordnet ist, dass die Drehachse des Zahnrads in etwa parallel zur Richtung der Anpresskraft ausgerichtet ist, d. h. die Richtung der Drehachse des Zahnrads soll nicht um mehr als 25°, bevorzugt nicht um mehr als 5°, von der Anpressrichtung abweichen. Diese Anordnung des Zahnrades hat mehrere Vorteile. Einerseits ist das Zahnrad bezüglich der Anpresskraft so ausgerichtet, dass das Zahnrad selbst durch die über die Wälzkörper übertragenen Kräfte nicht bzw. verhältnismässig wenig belastet wird. Weiterhin sind bei dieser Anordnung des Zahnrades die Toleranzen, die hinsichtlich der geometrischen Abmessungen einzelner Komponenten des Linearführungssystems eingehalten werden müssen, verhältnismässig gross. Beispielsweise können der Durchmesser der verwendeten Wälzkörper oder die Form der jeweiligen Wälzkörper-Lauffläche in einem verhältnismässig grossen Parameterbereich variiert werden. Weiterhin könnte eine Wälzkörper-Lauffläche gegebenenfalls in einem gewissen Umfang nachbearbeitet werden, ohne dass das jeweilige Zahnrad (durch ein Zahnrad mit anderen Abmessungen) ersetzt werden muss.

Bei einer Ausführungsform des erfindungsgemässen Linearführungssystems ist die eine der Zahnreihen der Zwangsführung direkt neben der jeweiligen Wälzkörper-Lauffläche des Laufbahneinsatzes ausgebildet. Auf diese Weise kann der Platzbedarf für den Laufbahneinsatz gering gehalten werden.

Weiterhin kann der jeweilige Grundkörper der Führungsschiene (durch eine geeignete Wahl der Werkstoffe und der Abmessungen des Grundkörpers) derart ausgelegt werden, dass er eine über den Führungskörper auf die Führungsschiene übertragbare Last aufnimmt und den jeweiligen Laufbahneinsatz gegen eine durch diese Last induzierbare Deformation mechanisch stabilisiert. Auf der Grundlage dieses Konzepts können die Abmessungen des jeweiligen Laufbahneinsatzes durchaus derart reduziert werden, dass der Laufbahneinsatz selbst aufgrund der Wirkung der Last deformiert würde, falls der Grundkörper der Führungsschiene nicht für eine mechanische Stabilisierung des Laufbahneinsatzes gegen Deformationen (Biegungen oder Torsionen aufgrund der Wirkung der Last) sorgen würde. Demnach ist es möglich, dass Volumen des Laufbahneinsatzes auf ein Minimum zu reduzieren, sofern der Werkstoff des Grundkörpers derart gewählt ist, dass aufgrund der Festigkeit des Werkstoffs für die jeweils gewünschte Stabilität der Führungsschiene gesorgt ist.

Bei einer weiteren Ausführungsform des Linearführungssystems ist vorgesehen, dass der Führungskörper ein einstückiger Körper ist und die andere der Zahnreihen der Zwangsführung an einer Oberfläche dieses Körpers ausgebildet ist. Bei dieser Ausführungsform wird bei der Herstellung des Führungskörpers sichergestellt, dass die andere der Zahnreihen der Zwangsführung im Rahmen vorbestimmter Toleranzen bezüglich der jeweiligen Wälzkörper-Laufflächen angeordnet ist. In diesem Fall kann auf den Einbau einer separaten Zahnstange, die eine Zahnreihe der Zwangsführung erhält, und auf eine präzise Ausrichtung einer solchen Zahnstange bezüglich einer Wälzkörper-Lauffläche des Führungskörpers des Linearführungssystems verzichtet werden. Auf dieser Grundlage kann die Montage des erfindungsgemässen Linearführungssystems mit verhältnismässig geringem Aufwand und relativ grosser Genauigkeit hinsichtlich der Positionierung der Zahnreihe der Zwangsführung durchgeführt werden.

In einer weiteren Variante des erfindungsgemässen Linearführungssystems ist vorgesehen, dass der Führungskörper mehrteilig ausgebildet ist und (wie die jeweilige Führungsschiene) mindestens einen Grundkörper und mindestens einen Laufbahneinsatz umfasst, wobei der jeweilige Laufbahneinsatz in jeweils einer im Grundkörper ausgebildeten Nut mittels einer stoffschlüssigen Verbindung und/oder durch Einklemmen befestigt ist und mindestens eine der jeweiligen Wälzkörper-Laufflächen an einer Oberfläche dieses Laufbahneinsatzes ausgebildet ist.

Bei dieser Variante können verschiedene Werkstoffe für den jeweiligen Grundkörper des Führungskörpers und den jeweiligen Laufbahneinsatz des Führungskörpers verwendet werden. Beispielsweise kann der jeweilige Grundkörper des Führungskörpers aus einem ersten Werkstoff und der Laufbahneinsatz aus einem zweiten Werkstoff gefertigt sein, wobei der erste Werkstoff ein geringeres spezifisches Gewicht als der zweite Werkstoff hat und der zweite Werkstoff eine grössere Wälzfestigkeit als der erste Werkstoff aufweist. Auf dieser Grundlage kann das Gesamtgewicht des Linearführungssystems reduziert und trotzdem eine lange Lebensdauer der jeweiligen Wälzkörper-Laufflächen des Führungskörpers gewährleistet werden.

In einer Fortbildung der vorstehend genannten Variante ist die andere der Zahnreihen der Zwangsführung in einem Laufbahneinsatz des Führungskörpers ausgebildet. Auf dieser Grundlage kann die Montage des erfindungsgemässen Linearführungssystems ebenfalls vereinfacht werden.

Weitere Einzelheiten der Erfindung und insbesondere beispielhafte Ausführungsformen des erfindungsgemässen Linearführungssystems werden im Folgenden anhand der beigefügten Zeichnungen erläutert. Es zeigen:
- Fig. 1: die Ausführungsform eines bekannten Linearführungs- systems mit einem in einer vorgegebenen Richtung be- wegbaren Führungskörper, einer Führungsschiene zur Führung des Führungskörpers mit zwei Laufbahneinsät- zen, zwei Käfigen für Wälzkörper und Zwangsführungen für die Käfige;
- Fig. 2: das Linearführungssystem gemäss Fig. 1, in einem Querschnitt (senkrecht zur Bewegungsrichtung des Führungskörpers);
- Fig. 3: einen Teil des Linearführungssystems gemäss Fig. 1, aus derselben Perspektive betrachtet, jedoch ver- grössert dargestellt;
- Fig. 4: eine Ausführungsform des erfindungsgemässen Linear- führungssystems;
- Fig. 5: ein Teil des Linearführungssystems gemäss Fig. 4, aus derselben Perspektive betrachtet, jedoch ver- grössert dargestellt;
- Fig. 6: das Linearführungssystem gemäss Fig. 4, in einem Querschnitt (senkrecht zur Bewegungsrichtung des Führungskörpers).

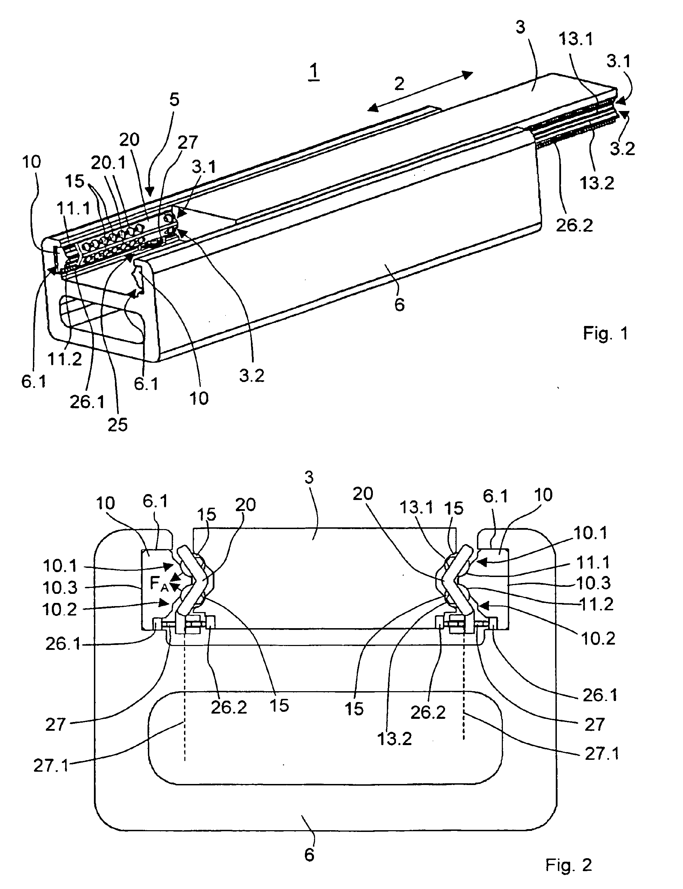

Zur besseren Verdeutlichung des Hintergrunds der Erfindung zeigen die Fig. 1-3 ein bekanntes Linearführungssystem 1, welches einen in einer vorgegebenen Richtung 2 bewegbaren Führungskörper 3 und eine Führungsschiene 5 zur Führung des Führungskörpers 3 umfasst. Der Führungskörper 3 ist über mehrere Wälzkörper 15 (im vorliegenden Beispiel über Kugeln) an der Führungsschiene 5 abgestützt, wobei jeder Wälzkörper 15 mit jeweils einer von mehreren an der Führungsschiene 5 ausgebildeten Wälzkörper-Laufflächen 11.1 bzw. 11.2 und mit einer von mehreren an dem Führungskörper 3 ausgebildeten Wälzkörper-Laufflächen 13.1 bzw. 13.2 in Kontakt steht.

Die Führungsschiene 5 ist mehrteilig ausgebildet und umfasst im vorliegenden Beispiel einen Grundkörper 6 und zwei Laufbahneinsätze 10. Der Grundkörper 6 hat ein in etwa U-förmiges Profil mit zwei seitlichen Schenkeln, die auf den dem Führungskörper 3 zugewandten Seiten jeweils eine Nut 6.1 aufweisen, welche der Aufnahme eines der Laufbahneinsätze 10 dient.

Jeder Laufbahneinsatz 10 ist ein einstückiger, länglicher Körper und hat ein Profil, dessen Form derart an die Form der jeweiligen Nut 6.1 angepasst ist, dass der Laufbahneinsatz 10 in der jeweiligen Nut 6.1 mittels einer stoffschlüssigen Verbindung und/oder durch Einklemmen befestigt werden kann.

Der jeweilige Laufbahneinsatz 10 hat auf einer Seite eine Basisfläche 10.3, mit welcher er - nach dem Einsetzen in die jeweilige Nut 6.1 - am Grund der Nut 6.1 mit dem Grundkörper 6 in Kontakt steht. Wie Fig. 1-3 zeigen, weist der Laufbahneinsatz 10 zwei der Basisfläche 10.3 gegenüberliegende, in einem Winkel zueinander geneigte Flanken 10.1 und 10.2 auf. Auf der dem Führungskörper 3 zugewandten Seite des Laufbahneinsatzes 10 sind jeweils nebeneinander zwei parallel zur Richtung 2 angeordnete Wälzkörper-Laufflächen 11.1 und 11.2 ausgebildet, welche jeweils auf verschiedenen Flanken 10.1 bzw. 10.2 angeordnet sind.

Wie die Fig. 1-3 zeigen, weist der Führungskörper 3 an jeder Seite, die einem der Laufbahneinsätze 10 zugewandt ist, zwei Flanken 3.1 bzw. 3.2 auf, die derart zueinander geneigt sind, dass die Flanke 3.1 im Wesentlichen parallel zur Flanke 10.1 des Laufbahneinsatzes 10 und die Flanke 3.2 im Wesentlichen parallel zur Flanke 10.2 des Laufbahneinsatzes 10 angeordnet ist. Auf jeder Flanke 3.1 ist eine der Wälzkörper-Laufflächen 13.1 und auf jeder Flanke 3.2 ist eine der Wälzkörper-Laufflächen 13.2 ausgebildet.

Wie die Fig. 1-3 weiterhin zeigen, sind die Wälzkörper 15, über die der Führungskörper 3 auf der Führungsschiene 5 abgestützt ist, in insgesamt vier Reihen jeweils hintereinander und parallel zur Richtung 2 jeweils in Zwischenräumen zwischen dem Führungskörper 3 und den beiden Laufbahneinsätzen 10 angeordnet. Der Führungskörper 3 ist demnach auf jedem der Laufbahneinsätze 10 über zwei Reihen von Wälzkörpern 15 abgestützt, wobei die Wälzkörper 15 einer der Reihen mit der Wälzkörper-Lauffläche 11.1 des jeweiligen Laufbahneinsatzes 10 und der entsprechenden Wälzkörper-Lauffläche 13.1 des Führungskörpers 3 und die Wälzkörper 15 der anderen Reihe mit der Wälzkörper-Lauffläche 11.2 desselben Laufbahneinsatzes 10 und der entsprechenden Wälzkörper-Lauffläche 13.2 des Führungskörpers 3 in Kontakt stehen.

Wie die Fig. 1-3 weiterhin zeigen, sind die beiden Reihen von Wälzkörpern 15, die auf den Wälzkörper-Laufflächen 11.1 und 11.2 des jeweiligen Laufbahneinsatzes 10 angeordnet sind, jeweils in einem Käfig 20 untergebracht. Der jeweilige Käfig 20 besteht aus einem Winkelprofil mit zwei Schenkeln, die im Wesentlichen parallel zu den Flanken 3.1 und 10.1 bzw. 3.2 und 10.2 angeordnet sind, und umfasst eine Reihe von Löchern 20.1, welche zur Aufnahme jeweils eines Wälzkörpers 15 dienen.

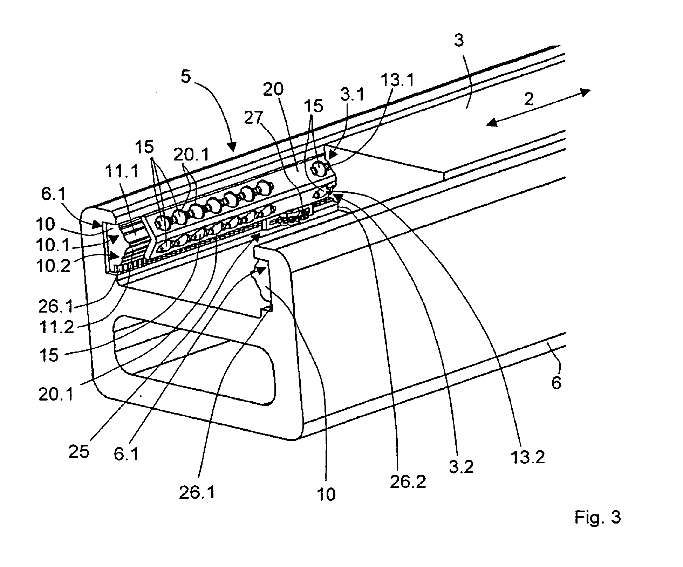

Der jeweilige Käfig 20 ist relativ zur Führungsschiene 5 und zum Führungskörper 3 mittels einer Zwangsführung 25 geführt. Die Zwangsführung 25 des jeweiligen Käfigs umfasst ein an dem Käfig 20 befestigtes Zahnrad 27 und mindestens zwei Zahnreihen 26.1 und 26.2, wobei die Zahnreihe 26.1 ortsfest an der Führungsschiene 5 und die Zahnreihe 26.2 ortsfest an dem Führungskörper 3 derart angeordnet ist, dass das Zahnrad 27 mit beiden Zahnreihen 26.1 und 26.2 verzahnt ist. In diesem Zusammenhang sei darauf hingewiesen, dass der Führungskörper 3 in den Fig. 1 und 3 zur Veranschaulichung jeweils in einer Stellung dargestellt ist, in der das Zahnrad 27 mit der Zahnreihe 26.1, nicht aber mit der Zahnreihe 26.2 verzahnt ist. Die Fig. 1 und 3 zeigen das Linearführungssystem 1 demnach in einem Zustand, der vor dem Abschluss des Zusammenbaus des Linearführungssystems 1 erreicht wird.

Der jeweilige Laufbahneinsatz 10 ist ein einstückiger Körper, wobei die Zahnreihe 26.1 in einem Teilbereich dieses Körpers ausbildet ist.

Im vorliegenden Beispiel ist das jeweilige Zahnrad 27 (in der Darstellung gemäss Fig. 2) derart am unteren Rand des entsprechenden Käfigs 20 angeordnet, dass die Drehachse 27.1 des Zahnrades 27 vertikal ausgerichtet ist. Die Zahnreihe 26.1 ist unmittelbar neben der Wälzkörper-Lauffläche 11.2 an einer (gemäss Fig. 1-3) unteren Kante des jeweiligen Laufbahneinsatzes 10 ausgebildet. Entsprechend ist die Zahnreihe 26.2 unmittelbar neben der Wälzkörper-Lauffläche 13.2 an einer (gemäss Fig. 1-3) unteren Kante des Führungskörpers 3 ausgebildet.

In Fig. 2 sind (im linken Teil der Darstellung) mit dem Symbol F_{A} gekennzeichnete Pfeile eingezeichnet, welche jeweils einem der Wälzkörpern 15 zugeordnet sind. Jeder dieser Pfeile gibt die Richtung der Anpresskraft F_{A} (im Folgenden "Anpressrichtung" genannt) an, mit welcher der jeweilige Wälzkörper 15 gegen die entsprechende Wälzkörper-Lauffläche 11.1 bzw. 11.2 gepresst wird (bei Einwirkung einer Last auf den Führungskörper 3 oder in den Fällen, in denen die Durchmesser der Wälzkörper 15 derart gewählt sind, dass die Führungsschiene 5 gegenüber dem Führungskörper 3 vorgespannt ist). Im vorliegenden Beispiel ist das Zahnrad 27 derart am Käfig 20 befestigt, dass die Drehachse 27.1 des Zahnrades 27 nicht parallel, sondern in einem Winkel von ca. 30-60° zur Anpressrichtung derjenigen Wälzkörper 15 ausgerichtet ist, welche zwischen den Wälzkörper-Laufflächen 11.2 und 13.2 angeordnet sind. Unter dieser Voraussetzung muss der Durchmesser des Zahnrades 27 relativ präzise auf den Abstand zwischen den genannten Wälzkörper-Laufflächen 11.2 und 13.2 bzw. den jeweiligen Durchmesser der mit diesen Wälzkörper-Laufflächen in Kontakt stehenden Wälzkörper 15 angepasst werden.

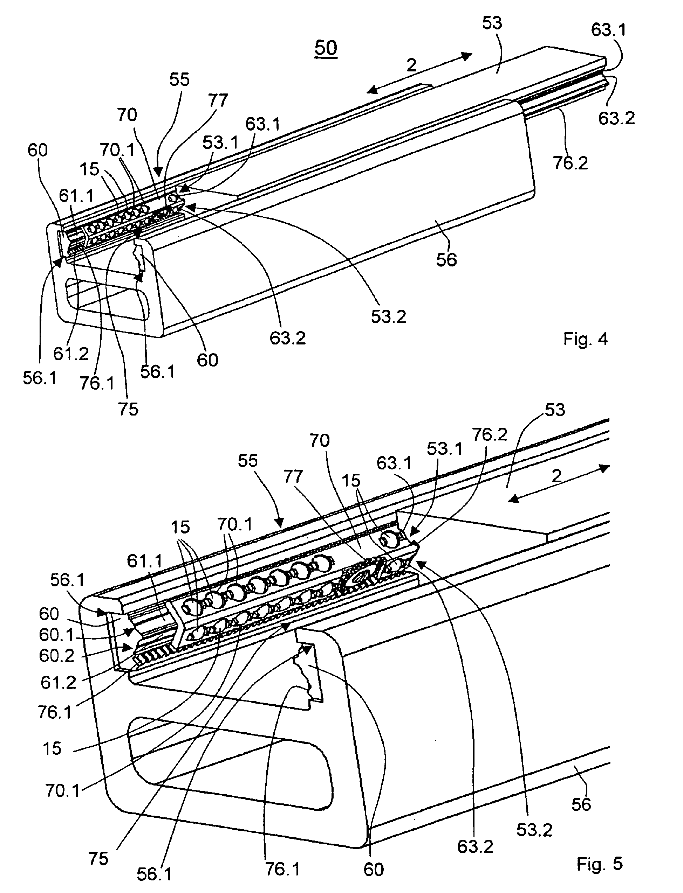

Die Fig. 4-7 zeigen nun eine Ausführungsform des erfindungsgemässen Linearführungssystems in Form des Linearführungs-s-ystems 50, welches einen in einer vorgegebenen Richtung 2 bewegbaren Führungskörper 53 und eine Führungsschiene 55 zur Führung des Führungskörpers 53 umfasst. Der Führungskörper 53 ist über mehrere Wälzkörper 15 (im vorliegenden Beispiel über Kugeln) an der Führungsschiene 55 abgestützt, wobei jeder Wälzkörper 15 mit jeweils einer von mehreren an der Führungsschiene 55 ausgebildeten Wälzkörper-Laufflächen 61.1 bzw. 61.2 und mit einer von mehreren an dem Führungskörper 63 ausgebildeten Wälzkörper-Laufflächen 63.1 bzw. 63.2 in Kontakt steht.

Die Ausführungsform gemäss Fig. 4-7 ist (abgesehen von noch zu erläuternden Unterschieden, die eine Zwangsführung 75 betreffen) hinsichtlich einer Reihe von Einzelheiten identisch mit der Ausführungsform gemäss Fig. 1-3.

So ist die Führungsschiene 55 ebenfalls mehrteilig ausgebildet und umfasst im vorliegenden Beispiel einen Grundkörper 56, der im Wesentlichen dem Grundkörper 6 entspricht, und zwei Laufbahneinsätze 60, welche sich allerdings in wesentlichen Punkten von den Laufbahneinsätzen 10 des Linearführungssystems unterscheiden (siehe unten).

Der Grundkörper 56 hat ebenfalls ein in etwa U-förmiges Profil mit zwei seitlichen Schenkeln, die auf den dem Führungskörper 53 zugewandten Seiten jeweils eine Nut 56.1 aufweisen, welche der Aufnahme eines der Laufbahneinsätze 60 dient.

Jeder Laufbahneinsatz 60 ist ein einstückiger Körper, dessen Form derart an die Form der jeweiligen Nut 56.1 angepasst ist, dass der Laufbahneinsatz 60 in der jeweiligen Nut 56.1 mittels einer stoffschlüssigen Verbindung und/oder durch Einklemmen befestigt werden kann.

Der Laufbahneinsatz 60 ähnelt insofern dem Laufbahneinsatz 10, als der Laufbahneinsatz 60 auf einer Seite eine Basisfläche 60.1, mit welcher er - nach dem Einsetzen in die jeweilige Nut 56.1 - am Grund der Nut 56.1 mit dem Grundkörper 56 in Kontakt steht. Weiterhin umfasst der Laufbahneinsatz 60 ebenfalls zwei der Basisfläche 60.3 gegenüberliegende, in einem Winkel zueinander geneigte Flanken 60.1 und 60.2, auf welchen zwei parallel zur Richtung 2 angeordnete Wälzkörper-Laufflächen 61.1 (auf Flanke 60.1) und 61.2 (auf Flanke 60.2) ausgebildet sind.

Der Führungskörper 53 ähnelt insofern dem Führungskörper 3, als der Führungskörper 53 an jeder Seite, die einem der Laufbahneinsätze 60 zugewandt ist, zwei Flanken 53.1 bzw. 53.2 aufweist, die derart zueinander geneigt sind, dass die Flanke 53.1 im Wesentlichen parallel zur Flanke 60.1 des Laufbahneinsatzes 60 und die Flanke 53.2 im Wesentlichen parallel zur Flanke 60.2 des Laufbahneinsatzes 10 angeordnet ist. Auf jeder Flanke 53.1 ist eine der Wälzkörper-Laufflächen 63.1 und auf jeder Flanke 53.2 ist eine der Wälzkörper-Laufflächen 63.2 angeordnet.

Der Führungskörper 53 ist ebenfalls auf jedem der Laufbahneinsätze 60 über zwei Reihen von Wälzkörpern 15 abgestützt, wobei die Wälzkörper 15 einer der Reihen mit der Wälzkörper-Lauffläche 61.1 des jeweiligen Laufbahneinsatzes 60 und der entsprechenden Wälzkörper-Lauffläche 63.1 des Führungskörpers 53 und die Wälzkörper 15 der anderen Reihe mit der Wälzkörper-Lauffläche 61.2 desselben Laufbahneinsatzes 60 und der entsprechenden Wälzkörper-Lauffläche 63.2 des Führungskörpers 53 in Kontakt stehen.

Wie die Fig. 4-6 weiterhin zeigen, sind die beiden Reihen von Wälzkörpern 15, die auf den Wälzkörper-Laufflächen 61.1 und 61.2 des jeweiligen Laufbahneinsatzes 60 angeordnet sind, jeweils in einem Käfig 70 untergebracht. Der jeweilige Käfig 70 besteht aus einem Winkelprofil mit zwei Schenkeln, die im Wesentlichen parallel zu den Flanken 53.1 und 60.1 bzw. 53.2 und 60.2 angeordnet sind, und umfasst eine Reihe von Löchern 70.1, welche zur Aufnahme jeweils eines Wälzkörpers 15 dienen.

Der jeweilige Käfig 70 ist relativ zur Führungsschiene 55 und zum Führungskörper 53 mittels einer Zwangsführung 75 geführt.

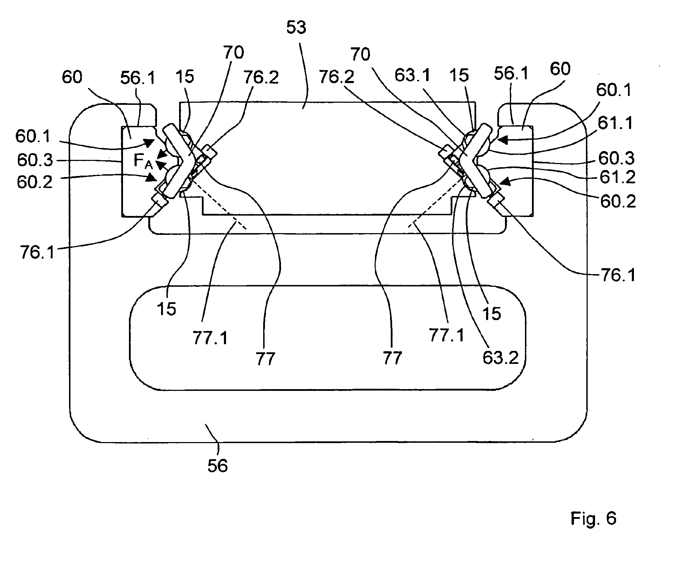

Die Zwangsführung 75 ähnelt der Zwangsführung 25 insofern, als die Zwangsführung 75 des jeweiligen Käfigs 70 ein an dem Käfig 70 befestigtes Zahnrad 77 und zwei Zahnreihen 76.1 und 76.2 umfasst, wobei die Zahnreihe 76.1 ortsfest an der Führungsschiene 55 und die Zahnreihe 76.2 ortsfest an dem Führungskörper 53 derart angeordnet ist, dass das Zahnrad 77 mit beiden Zahnreihen 76.1 und 76.2 verzahnt ist (der Führungskörper 53 ist in den Fig. 4 und 6 zur Veranschaulichung jeweils in einer Stellung dargestellt, in der das Zahnrad 77 mit der Zahnreihe 76.1, nicht aber mit der Zahnreihe 76.2 verzahnt ist, wie es einem Zustand des Linearführungssystems 1 entspricht, der vor dem Abschluss des Zusammenbaus des Linearführungssystems 1 erreicht wird). Weiterhin ist der jeweilige Laufbahneinsatz 60 gemäss der Erfindung ein einstückiger Körper, wobei die Zahnreihe 76.1 in einem Teilbereich dieses Körpers ausbildet ist.

Die Zwangsführung 75 unterscheidet sich von der Zwangsführung 25 im Wesentlichen durch die relative Anordnung des Zahnrades 77 und der Zahnreihen 76.1 und 76.2.

Im vorliegenden Beispiel ist das jeweilige Zahnrad 77 (in der Darstellung gemäss Fig. 6) im Unterschied zur Ausführungsform gemäss Fig. 1-3 derart an dem entsprechenden Käfig 70 angeordnet, dass die Drehachse 77.1 des Zahnrades 77 in etwa parallel zur Anpressrichtung derjenigen Wälzkörper 15 ausgerichtet ist, welche zwischen den Wälzkörper-Laufflächen 61.2 und 63.2 angeordnet sind, d.h. das Zahnrad 77 ist an dem Käfig 70 derart angeordnet, dass die Richtung der Drehachse 77.1 nicht um mehr als 25°, bevorzugt nicht um mehr als 5°, von der genannten Anpressrichtung abweicht. Dementsprechend ist das Zahnrad 77 im Wesentlichen parallel zur Flanke 60.2 ausgerichtet. Es sei darauf hingewiesen, dass in Fig. 6 (im linken Teil der Darstellung) mit dem Symbol F_{A} gekennzeichnete Pfeile eingezeichnet sind, welche jeweils einem der Wälzkörper 15 zugeordnet sind, wobei jeder dieser Pfeile die Richtung (Anpressrichtung) der Anpresskraft F_{A} angibt, mit welcher der jeweilige Wälzkörper 15 gegen die entsprechende Wälzkörper-Lauffläche 61.1 bzw. 61.2 gepresst wird (bei Einwirkung einer Last auf den Führungskörper 53 oder in den Fällen, in denen die Durchmesser der Wälzkörper 15 derart gewählt sind, dass die Führungsschiene 55 gegenüber dem Führungskörper 53 vorgespannt ist). Weiterhin ist die Drehachse 77.1 des Zahnrads (im Gegensatz zur Anordnung der Drehachse 27.1 im Falle des Linearführungssystems 1) nicht an einem Rand des Käfigs 70 angeordnet, sondern in einem zentralen Bereich zwischen den beiden Reihen von Wälzkörpern 15, die im Käfig 70 angeordnet sind (Fig. 6).

Die Zahnreihe 76.1 ist unmittelbar neben der Wälzkörper-Lauffläche 61.2 an einer (in der Darstellung gemäss Fig. 4-6) unteren Kante des jeweiligen Laufbahneinsatzes 60 ausgebildet, wobei die Zähne der Zahnreihe 76.1 senkrecht zur Drehachse 77.1 des Zahnrades 77 bzw. parallel zur Flanke 60.2 des Laufbahneinsatzes 60 ausgerichtet sind. Die Zähne der Zahnreihe 76.1 sind demnach - im Unterschied zu den Zähnen der Zahnreihe 26.1 der Ausführungsform gemäss Fig. 1-3 -nicht parallel, sondern schräg zur Horizontalen (in der Darstellung gemäss Fig. 4-6) ausgerichtet.

Die jeweilige Zahnreihe 76.2 ist zwischen den Wälzkörper-Laufflächen 63.1 und 63.2 auf einer der Flanken 53.1 ausgebildet, wobei die Zähne der Zahnreihe 76.2 jeweils parallel zum Zahnrad 77 ausgerichtet sind.

Die Zwangsführung 75 des Linearführungssystems 50 hat gegenüber der Zwangsführung 25 des Linearführungssystems mehrere Vorteile. Die Zwangsführung 70 kann wegen der Anordnung und Ausrichtung der Drehachse 77.1 platzsparender realisiert werden. Weiterhin wird das Zahnrad 77 bei einer mechanischen Belastung des Führungskörpers 53 bzw. des Käfigs 70 in der Regel mit verhältnismässig kleinen Momenten belastet.

Weiterhin können der Durchmesser der verwendeten Wälzkörper 15 und somit der Abstand der Wälzkörper-Laufflächen 61.2 und 63.2 oder die Form der jeweiligen Wälzkörper-Laufflächen 61.2 und 63.2 in einem verhältnismässig grossen Parameterbereich variiert werden. Weiterhin könnte mindestens eine der Wälzkörper- Laufflächen 61.2 und/oder 63.2 gegebenenfalls in einem gewissen Umfang nachbearbeitet werden, ohne dass das jeweilige Zahnrad 77 (durch ein Zahnrad mit anderen Abmessungen) ersetzt werden muss. Im Falle der Anordnung des Zahnrades 77 sind demnach die Toleranzen, die hinsichtlich der geometrischen Abmessungen einzelner Komponenten des Linearführungssystems 50 eingehalten werden müssen, verhältnismässig gross.

Die Laufbahneinsätze 10 und 60 können beispielsweise aus Wälzlagerstahl gefertigt sein, um eine lange Lebensdauer der jeweiligen Wälzkörper-Laufflächen 11.1, 11.2, 61.1 und 61.2 zu gewährleisten. Die Grundkörper 3 und 53 können beispielsweise aus Aluminium oder einem anderen Leichtmetall, einer Leichtmetalllegierung oder anderen im Vergleich zum Werkstoff des jeweiligen Laufbahneinsatzes 10 bzw. 60 verhältnismässig leichten Materialien gefertigt sein.

Im Rahmen der Erfindung könnten die Führungskörper 3 und 53 auch mehrteilig ausgebildet sein und (wie die Führungsschienen 5 bzw. 55) mindestens einen Grundkörper und mindestens einen Laufbahneinsatz umfassen, wobei der jeweilige Laufbahneinsatz in jeweils einer im Grundkörper ausgebildeten Nut mittels einer stoffschlüssigen Verbindung und/oder durch Einklemmen befestigt ist und die jeweiligen Wälzkörper-Laufflächen 13.1 und 13.2 bzw. 63.1 und 63.2 an einer Oberfläche dieses Laufbahneinsatzes ausgebildet sind. Die Werkstoffe für die jeweiligen Grundkörper und die jeweiligen Laufbahneinsätze des jeweiligen Führungskörpers können nach denselben Grundsätzen ausgewählt werden wie die Werkstoffe für die jeweiligen Grundkörper 6 bzw. 56 und die jeweiligen Laufbahneinsätze 10 bzw. 60 der jeweiligen Führungsschiene 5 bzw. 55.

Im Falle der Ausführungsformen gemäss Fig. 1-3 oder Fig. 4-6 sind die Wälzkörper-Laufflächen 13.1 und 13.2 des Führungskörpers 3 und Wälzkörper-Laufflächen 61.1 und 61.2 des Führungskörpers 53 jeweils auf Seitenflanken (d.h. auf den Flanken 3.1 und 3.2 bzw. den Flanken 53.1 und 53.2) von Nuten bzw. Vertiefungen, die am Führungskörper 3 bzw. am Führungskörper 53 ausgebildet sind, angeordnet. Die Form der entsprechenden Laufbahneinsätze 10 bzw. 60 ist jeweils auf der dem Führungskörper 3 bzw. 53 zugewandten Seite komplementär zu der jeweiligen Nut bzw. Vertiefung des Führungskörpers ausgebildet, d.h. die Wälzkörper-Laufflächen 11.1 und 11.2 des Laufbahneinsatzes 10 und die Wälzkörper-Laufflächen 61.1 und 61.2 sind jeweils auf benachbarten Seitenflanken (d.h. den Flanken 10.1 und 10.2 des Laufbahneinsatzes 10 und den Flanken 60.1 und 60.2 des Laufbahneinsatzes 60) angeordnet, die derart geneigt sind, dass sie eine "Erhöhung" an der Oberfläche des Laufbahneinsatzes 10 bzw. des Laufbahneinsatzes 60 bilden.

Abweichend von der vorstehend genannten Anordnung der jeweiligen Wälzkörper-Laufflächen können im Rahmen der Erfindung benachbarte Wälzkörper-Laufflächen eines Laufbahneinsatzes einer Führungsschiene eines alternativen Linearführungssystems (in einer analogen Abwandlung der Ausführungsformen gemäss Fig. 1-3 oder Fig. 4-6) auch auf Seitenflanken einer in dem jeweiligen Laufbahneinsatz der Führungsschiene ausgebildeten Nut angeordnet sein, während die entsprechenden Wälzkörper-Laufflächen eines Führungskörpers des Linearführungssystems auf Seitenflanken einer Erhöhung, die an der Oberfläche des jeweiligen Führungskörpers ausgebildet ist, angeordnet sein können. In diesem Fall könnte auch eine Zahnreihe der jeweiligen Zwangsführung des jeweiligen Käfigs platzsparend zwischen zwei benachbarten Wälzkörper-Laufflächen des Laufbahneinsatzes der Führungsschiene angeordnet sein(in einer analogen Abwandlung der Ausführungsform gemäss Fig. 4-6).

## Patentansprüche

1. Linearführungssystem (50),
mit einem in einer vorgegebenen Richtung (2) bewegbaren Führungskörper (53) und einer Führungsschiene (55) zur Führung des Führungskörpers (53),
welcher Führungskörper (53) über mehrere Wälzkörper (15) an der Führungsschiene (55) abgestützt ist, wobei jeder Wälzkörper (15) mit mindestens einer an der Führungsschiene (55) ausgebildeten Wälzkörper-Lauffläche (61.1, 61.2) und mit mindestens einer an dem Führungskörper (53) ausgebildeten Wälzkörper-Lauffläche (63.1, 63.2) in Kontakt steht,
welche Führungsschiene (55) mehrteilig ausgebildet ist und mindestens einen Grundkörper (56) und mindestens einen Laufbahneinsatz (60) umfasst,
wobei der jeweilige Laufbahneinsatz (60) in jeweils einer im Grundkörper (56) ausgebildeten Nut (56.1) mittels einer stoffschlüssigen Verbindung und/oder durch Einklemmen befestigt ist und mindestens eine der jeweiligen Wälzkörper-Laufflächen (61.1, 61.2) an einer Oberfläche dieses Laufbahneinsatzes (60) ausgebildet ist,
wobei der jeweilige Grundkörper (56) aus einem ersten Werkstoff und der Laufbahneinsatz (60) aus einem zweiten Werkstoff gefertigt ist, welcher erste Werkstoff ein geringeres spezifisches Gewicht als der zweite Werkstoff hat und welcher zweite Werkstoff eine grössere Wälzfestigkeit als der erste Werkstoff aufweist,
wobei mindestens eine Gruppe von mehreren Wälzkörpern (15) in jeweils einem Käfig (70) angeordnet ist und der jeweilige Käfig (70) relativ zur Führungsschiene (55) und zum Führungskörper (53) mittels einer Zwangsführung (75) geführt ist,
wobei die Zwangsführung (75) des jeweiligen Käfigs ein an dem Käfig (50) befestigtes Zahnrad (77) und mindestens zwei Zahnreihen (76.1, 76.2) umfasst,
wobei eine der Zahnreihen (76.1) ortsfest an der Führungsschiene (55) und eine andere der Zahnreihen (76.2) ortsfest an dem Führungskörper (53) derart angeordnet ist, dass das Zahnrad (77) mit beiden Zahnreihen (76.1, 76.2) verzahnt ist,
**dadurch gekennzeichnet, dass**
der jeweilige Laufbahneinsatz (60) ein einstückiger Körper ist, wobei die eine der Zahnreihen (76.1) in einem Teilbereich dieses Körpers ausgebildet ist, wobei
mindestens eine Teilmenge der Wälzkörper (15) derart zwischen einer Wälzkörper-Lauffläche (61.2) des jeweiligen Laufbahneinsatzes (60) und dem Führungskörper (53) angeordnet ist, dass die Wälzkörper (15) der Teilmenge jeweils mit einer Anpresskraft (F_{A}) in einer vorgegebenen Anpressrichtung an die Wälzkörper-Lauffläche (61.2) des jeweiligen Laufbahneinsatzes (60) gepresst werden, und wobei
das Zahnrad (77) an dem jeweiligen Käfig (70) derart angeordnet ist, dass die Richtung der Drehachse (77.1) des Zahnrads (77) nicht um mehr als 25°, bevorzugt nicht um mehr als 5°, von der Anpressrichtung abweicht.

2. Linearführungssystem (50) nach Anspruch 1, wobei die eine der Zahnreihen (76.1) neben der jeweiligen Wälzkörper-Lauffläche (61.2) des Laufbahneinsatzes (60) ausgebildet ist.

3. Linearführungssystem (50) nach einem der Ansprüche 1 oder 2, wobei der Grundkörper (56) derart ausgelegt ist, dass er eine über den Führungskörper (53) auf die Führungsschiene (55) übertragbare Last aufnimmt und den jeweiligen Laufbahneinsatz (60) gegen eine durch diese Last induzierbare Deformation stabilisiert.

4. Linearführungssystem (50) nach einem der vorstehenden Ansprüche, wobei der Führungskörper (53) ein einstückiger Körper ist und die andere der Zahnreihen (76.2) an einer Oberfläche dieses Körpers ausgebildet ist.

5. Linearführungssystem (50) nach einem der vorstehenden Ansprüche, wobei die von dem jeweiligen Käfig (70) geführten Wälzkörper (15) in diesem Käfig in mindestens zwei parallelen Reihen angeordnet sind und verschiedene Reihen von Wälzkörpern jeweils mit verschiedenen, in einem Abstand zueinander auf dem jeweiligen Laufbahneinsatz (60) ausgebildeten Wälzkörper-Laufflächen (61.1, 61.2) an der Führungsschiene (55) und entsprechend mit verschiedenen, in einem Abstand zueinander angeordneten Wälzkörper-Laufflächen (63.1, 63.2) an dem Führungskörper (53) in Kontakt stehen.

6. Linearführungssystem nach Anspruch 5, wobei der Laufbahneinsatz (60) zwei in einem Winkel zueinander geneigte Flanken (60.1, 60.2) aufweist und zwei benachbarte Wälzkörper-Laufflächen (61.1, 61.2) des Laufbahneinsatzes (60) jeweils auf verschiedenen Flanken angeordnet sind.

7. Linearführungssystem nach einem der Ansprüche 5 oder 6, wobei die eine der Zahnreihen in einem Zwischenraum zwischen zwei der auf dem jeweiligen Laufbahneinsatz ausgebildeten Wälzkörper-Laufflächen angeordnet ist.

8. Linearführungssystem (50) nach einem der Ansprüche 5 bis 7, wobei der Führungskörper (53) zwei in einem Winkel zueinander geneigte Flanken (53.1, 53.2) aufweist und zwei benachbarte Wälzkörper-Laufflächen (63.1, 63.2) des Führungskörpers (53) jeweils auf verschiedenen Flanken (53.1, 53.2) angeordnet sind.

9. Linearführungssystem (50) nach Anspruch 5 oder 8, wobei die andere der Zahnreihen (76.2) in einem Zwischenraum zwischen zwei der an dem Führungskörper (53) angeordneten Wälzkörper-Laufflächen (63.1, 63.2) ausgebildet ist.

10. Linearführungssystem nach einem der vorstehenden Ansprüche, wobei der Führungskörper mehrteilig ausgebildet ist und mindestens einen Grundkörper und mindestens einen Laufbahneinsatz umfasst, wobei der jeweilige Laufbahneinsatz in jeweils einer im Grundkörper ausgebildeten Nut mittels einer stoffschlüssigen Verbindung und/oder durch Einklemmen befestigt ist und mindestens eine der jeweiligen Wälzkörper-Laufflächen an einer Oberfläche dieses Laufbahneinsatzes ausgebildet ist.

11. Linearführungssystem nach Anspruch 10, wobei die andere der Zahnreihen in einem Laufbahneinsatz des Führungskörpers ausgebildet ist.

12. Linearführungssystem nach einem der Ansprüche 10 oder 11, wobei der jeweilige Grundkörper des Führungskörpers aus einem ersten Werkstoff und der Laufbahneinsatz aus einem zweiten Werkstoff gefertigt ist, welcher erste Werkstoff ein geringeres spezifisches Gewicht als der zweite Werkstoff hat und welcher zweite Werkstoff eine grössere Wälzfestigkeit als der erste Werkstoff aufweist.

## Claims

1. Linear guide system (50),
with a guide body (53) moveable in a predetermined direction (2) and a guide rail (55) for guiding the guide body (53),
which guide body (53) is supported via multiple rolling bodies (15) on the guide rail (55), whereby each rolling body (15) is in contact with at least one rolling body-running surface (61.1, 61.2) formed on the guide rail (55) and with at least one rolling body-running surface (63.1, 63.2) formed on the guide body (53),
which guide rail (55) is formed in multiple parts and includes at least one base body (56) and at least one track insert (60),
whereby the respective track insert (60)is attached in a respective groove (56.1) formed in the base body (56) by means of a substance-to-substance connection and/or by clamping and at least one of the respective rolling body-running surfaces (61.1, 61.2) is formed on a surface off this track insert (60),
whereby the respective base body (56) is made from a first material and the track insert (60) is made from a second material, which first material has a smaller specific weight than the second material and which second material has a greater rolling stability than the first material,
whereby at least one group of multiple rolling bodies (15) is arranged in a respective cage (70) and the respective cage (70) is guided relative to the guide rail (55) and to the guide body (53) by means of a positive guide (75),
whereby the positive guide (75) of the respective cage (50) includes a gearwheel (77) and at least two rows of teeth (76.1, 76.2),
whereby one of the rows of teeth (76.1) is fixed on the guide rail (55) and another of the row of teeth (76.2) is fixed on the guide body (53) such that the gearwheel (77) is meshed with both rows of teeth (76.1, 76.2),
**characterized in that**
the respective track insert (60) is a one-piece body, whereby the one of the rows of teeth (76.1) is formed in a portion of this body, whereby
at least one subportion of the rolling body (15) is disposed between a rolling body-running surface (61.2) of the respective track insert (60) and the guide body (53), such that the rolling bodies (15) of the subportion are pressed respectively with a pressing force (F_{A}) in a predetermined pressing direction on the rolling body-running surface (61.2) of the respective track insert (60), and whereby
the gearwheel (77) is disposed on the respective cage (70), such that the direction of the axis of rotation (77.1) of the gearwheel (77) deviates from the pressing direction no more than 25°, preferably no more than 5°.

2. Linear guide system (50) according to claim 1, whereby the one of the rows of teeth (76.1) is formed near the respective rolling body-running surface (61.2) of the track insert (60).

3. Linear guide system (50) according to one of claims 1 or 2, whereby the base body (56) is designed such that it absorbs a load transferable via the guide body (53) onto the guide rail (55) and stabilizes the respective track insert (60) against a deformation induced by this load.

4. Linear guide system (50) according to one of the preceding claims, whereby the guide body (53) is a one-piece body and the other of the rows of teeth (76.2) is formed on a surface of this body.

5. Linear guide system (50) according to one of the preceding claims, whereby the rolling bodies (15) guided by the respective cage (70) are disposed in this cage in at least two parallel rows and different rows of rolling bodies are in contact with respective, different rolling body-runningsurfaces (61.1, 61.2) arranged spaced from one another on the respective track insert (60) on the guide rail (55) and accordingly with the differentrolling body-running surfaces (63.1, 63.2) arranged spaced from one another on the guide body (53).

6. Linear guide system according to claim 5, whereby the track insert (60) has two faces (60.1, 60.2) inclined at an angle to one another and two adjacent rolling body-running surfaces (61.1, 61.2) of the track insert (60) are disposed respectively on different faces.

7. Linear guide system according to one of claims 5 or 6, whereby the one of the rows of teeth is arranged in an intermediate space between two of the rolling body-running surfaces formed on the respective track insert.

8. Linear guide system (50) according to one of claims 5 through 7, whereby the guide body (53) has two faces (53.1, 53.2) inclined at an angle to one another and two adjacent rolling body-running surfaces (63.1, 63.2) of the guide body (53) are disposed respectively on different faces (53.1, 53.2)

9. Linear guide system (50) according to claim 5 or 8, whereby the other of the rows of teeth (76.2) is formed in an intermediate space between two rolling body-running surfaces (63.1, 63.2) disposed on the guide body (53).

10. Linear guide system according to one of the preceding claims, whereby the guide body is formed in multiple parts and includes at least one base body and at least one track insert, whereby the respective track insert is attached in a respective groove formed in the base body by means of a substance-to-substance connection and/or by clamping and at least one of the respective rolling body-running surfaces is formed on a surface of this track insert.

11. Linear guide system according to claim 10, whereby the other of the rows of teeth is formed in a track insert of the guide body.

12. Linear guide system according to one of claims 10 or 11, whereby the respective base body of the guide body is made from a first material and the track insert is made from a second material, which first material has a smaller specific weight than the second material and which second material has a greater rolling stability than the first material.

## Revendications

1. Système de guidage linéaire (50)
avec un corps de guidage (53) mobile dans une direction prédéfinie (2) et une glissière de guidage (55) pour guider le corps de guidage (53),
lequel corps de guidage (53) s'appuie par plusieurs corps de roulement (15) sur la glissière de guidage (55), chaque corps de roulement (15) étant en contact avec au moins une surface de roulement de corps de roulement (61.1, 61.2) conçue sur la glissière de guidage (55) et avec au moins une surface de roulement de corps de roulement (63.1, 63.2) conçue sur le corps de guidage (53),
laquelle glissière de guidage (55) est conçue en plusieurs éléments et comprend au moins un corps de base (56) et au moins un insert de glissière (60),
l'insert de glissière (60) respectif étant fixé dans chaque fois une rainure (56.1) conçue dans le corps de base (56) au moyen d'une liaison par matière et/ou par serrage et au moins l'une des surfaces de roulement de corps de roulement (61.1, 61.2) respectives étant conçue sur une surface dudit insert de glissière (60),
le corps de base (56) respectif étant fabriqué en un premier matériau et l'insert de glissière (60) en un deuxième matériau, lequel premier matériau présentant un poids spécifique inférieur à celui du deuxième matériau et lequel deuxième matériau présentant une stabilité au roulement supérieure à celle du premier matériau,
au moins un groupe de plusieurs corps de roulement (15) étant disposé dans chaque fois une cage (70) et la cage (70) respective étant guidée par rapport à la glissière de guidage (55) et au corps de guidage (53) au moyen d'un guidage forcé (75),
le guidage forcé (75) de la cage respective comprenant une roue dentée (77) fixée sur la cage (50) et au moins deux rangées de dents (76.1, 76.2),
l'une des rangées de dents (76.1) étant disposée de façon stationnaire sur la glissière de guidage (55) et une autre des rangées de dents (76.2) étant disposée de façon stationnaire sur le corps de guidage (53), de telle sorte que la roue dentée (77) soit dentée avec les deux rangées de dents (76.1, 76.2),
**caractérisé en ce que**
l'insert de glissière (60) respectif est un corps en monobloc, l'une des rangées de dents (76.1) étant conçue dans une zone partielle dudit corps,
au moins un nombre partiel des corps de roulement (15) étant disposé entre une surface de roulement de corps de roulement (61.2) de l'insert de glissière (60) respectif et le corps de guidage (53) de telle sorte que les corps de roulement (15) du nombre partiel soit pressés chacun avec une force de pression de contact (F_{A}) dans une direction de pression de contact définie sur la surface de roulement de corps de roulement (61.2) de l'insert de glissière (60) et
la roue dentée (77) étant disposée sur la cage (70) respective de telle sorte que la direction de l'axe de rotation (77.1) de la roue dentée (77) ne diffère pas de plus de 25°, de préférence de pas de plus de 5° de la direction de pression de contact.

2. Système de guidage linéaire (50) selon la revendication 1, l'une des rangées de dents (76.1) étant conçue à côté de la surface de roulement de corps de roulement (61.2) respective de l'insert de glissière (60).

3. Système de guidage linéaire (50) selon l'une quelconque des revendications 1 ou 2, le corps de base (56) étant dimensionné de sorte à absorber une contrainte transmissible par l'intermédiaire du corps de guidage (53) sur la glissière de guidage (55) et à stabiliser l'insert de glissière (60) respectif contre une déformation susceptible d'être induite par ladite contrainte.

4. Système de guidage linéaire (50) selon l'une quelconque des revendications précédentes, le corps de guidage (53) étant un corps en monobloc et l'autre des rangées de dents (76.2) étant conçue sur une surface dudit corps.

5. Système de guidage linéaire (50) selon l'une quelconque des revendications précédentes, les corps de roulement (15) guidés par la cage (70) respective étant disposés dans ladite cage en au moins deux rangées parallèles et différentes rangées de corps de roulement étant respectivement en contact avec différentes surfaces de roulement de corps de roulement (61.1, 61.2) conçues avec un écart mutuel sur l'insert de glissière (60) respectif sur la glissière de guidage (55) et en conséquence, avec différentes surfaces de roulement de corps de roulement (63.1, 63.2) disposées avec un écart mutuel sur le corps de guidage (53).

6. Système de guidage linéaire selon la revendication 5, l'insert de glissière (60) présentant deux flancs (60.1, 60.2) inclinés l'un vers l'autre sous un angle et deux surfaces de roulement de corps de roulement (61.1, 61.2) voisines de l'insert de glissière (60) étant disposées chacune sur différents flancs.

7. Système de guidage linéaire selon l'une quelconque des revendications 5 ou 6, l'une des rangées de dents étant disposée dans un interstice entre deux des surfaces de roulement de corps de roulement conçues sur l'insert de glissière respectif.

8. Système de guidage linéaire (50) selon l'une quelconque des revendications 5 à 7, le corps de guidage (53) présentant deux flancs (53.1, 53.2) inclinés l'un vers l'autre sous un angle et deux surfaces de roulement de corps de roulement (63.1, 63.2) voisines du corps de guidage (53) étant disposées chacune sur différents flancs (53.1, 53.2).

9. Système de guidage linéaire (50) selon la revendication 5 ou 8, l'autre des rangées de dents (76.2) étant conçue dans un interstice entre deux des surfaces de roulement de corps de roulement (63.1, 63.2) disposées sur le corps de guidage (53).

10. Système de guidage linéaire selon l'une quelconque des revendications précédentes, le corps de guidage étant conçu en plusieurs éléments et comprenant au moins un corps de base et au moins un insert de glissière, l'insert de glissière respectif étant fixé dans chaque fois une rainure conçue dans le corps de base au moyen d'une liaison par matière et/ou par serrage et au moins l'une des surfaces de roulement de corps de roulement respective étant conçue sur une surface dudit insert de glissière.

11. Système de guidage linéaire selon la revendication 10, l'autre des rangées de dents étant conçue dans un insert de glissière du corps de guidage.

12. Système de guidage linéaire selon l'une quelconque des revendications 10 ou 11, le corps de base (56) respectif du corps de guidage étant fabriqué en un premier matériau et l'insert de glissière en un deuxième matériau, lequel premier matériau présentant un poids spécifique inférieur à celui du deuxième matériau et lequel deuxième matériau présentant une stabilité au roulement supérieure à celle du premier matériau.
